# EUROPEAN PATENT APPLICATION

(11) **EP 1 597 964 A1**
(43) Date of publication of application: **23.11.2005**
(21) Application number: 04076448.2
(22) Date of filing: 18.05.2004
(51) Int. Cl.: A01G 23/04

(54) **Method for cutting free plants from soil and a cutting apparatus for cutting through the soil surrounding at least one plant**

(71) Applicant: Thomsen, Kim, 9200 Aalborg O (DK); Riise, René Christian, 9200 Aalborg SV (DK)
(72) Inventor: Thomsen, Kim, 9200 Aalborg O (DK); Riise, René Christian, 9200 Aalborg SV (DK)
(74) Representative: Plougmann & Vingtoft A/S

(57) **Abstract**

The invention relates to a method for cutting free plants by cutting through soil surrounding a plurality of plants. The invention also relates to a cutting apparatus for cutting free plants by cutting through the soil surrounding a plurality of plants. The method comprises the steps of inserting at least a first section of a blade (1) into the soil, cutting through the soil around a plant with the cutting apparatus, displacing the cutting apparatus to a proximity of a second plant, while maintaining at least a part of the blade (1) in the soil during the displacement of the cutting apparatus, and cutting through the soil around the second plant with the cutting apparatus. The method results in a very fast cutting free of plants. The apparatus according to the invention is intended for being vertically positioned at a level higher than the height of the least first plant. The apparatus also results in a very fast cutting free of a plurality of plants in combination with the method according to the invention.

## Description

### FIELD OF THE INVENTION

The invention relates to a method for cutting free plants by cutting through soil surrounding at least one plant. The invention also relates to a cutting apparatus for cutting free plants by cutting through the soil surrounding at least one plant.

### BACKGROUND OF THE INVENTION

US 4,332,093 describes a machine for cutting shrubs and other plants from the soil and for lifting them with their root balls intact to deposit them upon the ground or in a previously formed hole for transplanting, comprises a support mounted on the three-point hitch of a tractor and provided with a spade or blade which can be drawn downwardly below the shrub by forward movement of the tractor and then rotated through 360° to free the root ball from the surrounding soil. The support also carries an arm, which can engage the root neck, stalk, trunk or stem of the shrub to hold and displace it independently of the blade-carrying structure. This machine is technically very complicated and expensive to manufacture, and the machine is also cumbersome and time-consuming to use.

### SUMMARY OF THE INVENTION

It may be seen as an object of the present invention to provide a method and an apparatus, which significantly decreases the time used, when cutting free plants from soil. Also, it may be seen as an object of the present invention to provide an apparatus, which is much more simple from a constructional and/or operational point of view.

These objects and other objects are obtained by providing in a first aspect of the invention a method for cutting free plants by cutting through soil surrounding at least one plant, said method comprising the steps of:
a) providing a cutting apparatus, said cutting apparatus comprising a blade,
b) inserting at least a first section of the blade into the soil,
c) cutting through the soil around a first plant with the cutting apparatus,
d) displacing the cutting apparatus from the first plant to a proximity of a second plant, while maintaining at least a part of the blade in the soil during the displacement, and
e) cutting through the soil around the second plant with the cutting apparatus.

The method as described above is a total contradiction to the person skilled in the art. When using soil-treating devices such as ploughs, harrows and the like, it is advantageous to limit the period of time during which the soil-treating apparatus is actually submerged in the soil. It is time-consuming having to pull the soil-treating apparatus through the soil, and it is more costly in terms of fuel consumed by the vehicle pulling the soil-treating apparatus through the soil. Any person skilled in the art, perhaps a farmer or other agriculturally or horticulturally employed person, when treating soil, will therefore limit the time spent during which the soil treating apparatus is pulled through the soil.

Nevertheless, the above-mentioned method involves a step during which at least a part of the blade of the cutting apparatus is maintained in the soil during the displacement. This is contradictory to the teaching of the person skilled in the art, who in order to save time and costs would raise the at least part of the blade out of the soil while displacing the cutting apparatus from one plant having been cut free to another plant to be cut free.

Despite the contradictory nature of this method step, it has turned out that maintaining at least a part of the blade in the soil during the displacement actually is at least more time-saving than having to pull out from the soil, at the position of the first plant, the blade and subsequently, at the location of the second plant, having to insert the blade into the soil again. By not having to pull out and re-insert the blade a far more continuous movement of the vehicle supporting and pulling the blade may be achieved.

The cutting apparatus is intended for cutting through soil, but may at least partly be intended for also cutting roots of the plants as the cutting apparatus is cutting through the soil around the plants. If the roots of the plants do not extend widely in a lateral or downward direction, perhaps all the roots will be situated within the soil cup cut free by the apparatus. However, If the roots of the plants do extend in a lateral or downward direction, perhaps some of the roots will be situated outside the soil cup cut free by the apparatus, and then at least some of the roots must be cut in order to cut free the plant.

Preferably, the blade is inserted in a position substantially normal relative to the surface of the soil, at least during the cutting around the plants. Thereby, the cutting free of the plants is performed with as small a blade surface as possible inserted into the soil thus reducing friction between the blade and the soil. Also, the insertion is eased in the sense that a merely downward displacement of the blade is needed during insertion of the blade into the soil. No additional rotation or tilting of the blade is necessary during insertion.

In one aspect of the method, the blade is maintained in a fixed position relative to the surface of the soil seen in a direction normal to the surface of the soil, said fixed position being maintained both during cutting around the plants and during displacement of the cutting apparatus from the first plant to the second plant. No further displacement in the direction normal to the surface of the soil is necessary. Thus, a purely continuous movement of the blade is possible, non-dependent on whether the blade is cutting free plants or the blade is displaced from one plant to another. The same position of the blade during displacement of the blade from one plant to another is especially possible in soil not containing larger stones, which the blade, if present, may have difficulties in passing.

In another aspect of the method, the blade is maintained in a fixed position relative to the surface of the soil seen in a direction normal to the surface of the soil, said fixed position being relatively lower in relation to the surface of the soil during cutting around the plants and being relatively higher in relation to the surface of the soil during displacement of the cutting apparatus from the first plant to the second plant. An upward displacement in the direction normal to the surface of the soil is necessary. Thus, a quasi-continuous displacement of the blade is effected, dependent on whether the blade is cutting free plants or the blade is displaced from one plant to another. The higher position of the blade during displacement of the blade from one plant to another may be advantageous in soil containing larger stones which the blade may have difficulties in passing.

Depending on the cutting pattern used when cutting free the plants, and depending on the type of vehicle used for supporting the apparatus when cutting free the plants, the blade may be displaced at least quasi-continuously during cutting through the soil, said quasi-continuously displacement possibly only being interrupted during change of displacement direction of the blade. Typically, the continuous displacement is effected during the actual cutting free of the plants and during displacement of the blade from one plant to another. But it may be necessary to perform some kind of positioning of the blade in relation to a second plant to be cut free, before the blade is in the correct position for the actual cutting free of the second plant. This may introduce a quasi-continuous displacement of the blade. The objects and other objects of the invention may also be accomplished by means of a A cutting apparatus for cutting free plants by cutting through the soil surrounding at least one plant, said apparatus comprising:
- a rotary bearing and a connecting beam rotatably mounted in the rotary bearing, the connecting beam being adapted to be rotated by rotation means, and
- a blade being connected to the rotary bearing via the connecting beam, and said blade further being adapted to cut through the soil when inserted into the soil, and said blade preferably also being adapted for cutting roots of the plants, when being rotated around a plant constituting at least a first plant from a plurality of plants,
- and where an axis of rotation of the rotary bearing during operation of the cutting apparatus is intended for being laterally positioned within a projection, normal to the surface of the soil, of the plant being cut free,
- and where the rotary bearing during operation of the cutting apparatus is intended for being vertically positioned at a level higher than the height of the at least first plant.

All soil-treating apparatuses will have as a working principle during operation of the apparatus being as close to the soil as the design and the function of the apparatus permits. Thereby, any forces and torque loads are limited. Therefore, when constructing soil-treating apparatuses, the person skilled in the art will aim at designing the apparatus in consideration of the vehicle for supporting and pulling the apparatus, but also in consideration of limiting forces and torque loads in order to reduce the dimensions of the individual elements of the apparatus for thereby saving weight and cost.

Nevertheless, the cutting apparatus according to the invention is constructed so that a major part of the apparatus is supported in a relatively high level position in relation to the soil where the actual operation of the apparatus is to take place. However, due to this fact, it has proven to be even more time-saving that the apparatus do not have to be positioned in relation to the plants by time-consuming positioning around the stem and/or branches of one plant, subsequent repositioning away from the stem and/or branches of the one plant, and finally a further positioning around the stem and /or branches of another plant. The relatively high level position may either be established on a specially designed vehicle such as a portal tractor or it may be established by suspending the apparatus from a crane or other means for supporting bodies from a relatively high level position.

The support for supporting the apparatus and the rotary bearing between the motor and the blade may be displaceable in different directions. Possibly, the rotary bearing, in relation to the support, is mounted at least laterally linearly displaceable on the support. Also possible, the rotary bearing is mounted at least pivotally displaceable on the support, the pivotal axis being different from the axis of rotation of the rotary bearing. By both or one of the mentioned possible displacement directions, the rotary bearing may be displaced along a linear and/or along a circular track, thus also enabling the blade being displaced linearly or circularly. This will ease any positioning of the blade in relation to the plant to be cut free, thus perhaps avoiding the vehicle supporting the apparatus to be moved into an exact location in order to position the blade in relation to the plant.

In a preferred embodiment of the apparatus at least part of the connecting beam is capable of being radially displaced relatively to the rotary bearing. By additionally or alternatively allowing the connecting beam between the rotary bearing and the blade to be displaced radially a further possibility or an alternative possibility is provided for positioning the blade in relation to the plant intended to be cut free.

The blade may have many different shapes depending on the type of plant to be cut free, depending on the soil through which the blade is to displaced and depending on any desired shape of the soil cup being cut free by the blade. Accordingly, the blade comprises at least one portion having a shape chosen from the group of: a substantially linear shape, an inwardly curved shape, an outwardly curved shape, a partly circular shape, a partly parabolic shape, a partly elliptic shape, a shape with a at least a first section and third section separated by a second bend section, and any combinations thereof.

### BRIEF DESCRIPTION OF THE FIGURES

The invention is hereafter described in relation to the accompanying drawing, where
fig. 1 is a perspective view of an embodiment of an apparatus according to the invention,
fig. 2 is substantially plane isometric view of the embodiment of the apparatus, said plane view seen in a direction perpendicular to a vertical longitudinal axis of the apparatus,
fig. 3A-3F is a sketch of a cutting pattern for cutting free plants from one row of plants,
fig. 4A-4L is a sketch of a cutting pattern for cutting free plants from two rows of plants,
fig. 5A-5P is a sketch of a cutting pattern for cutting free plants from three rows of plants.

### DETAILED DESCRIPTION OF THE INVENTION

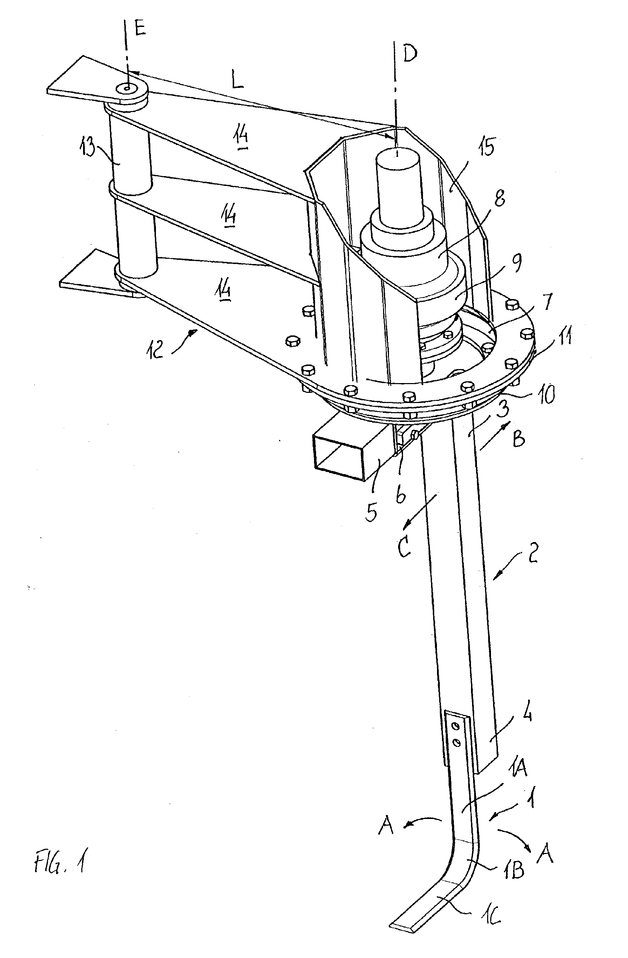

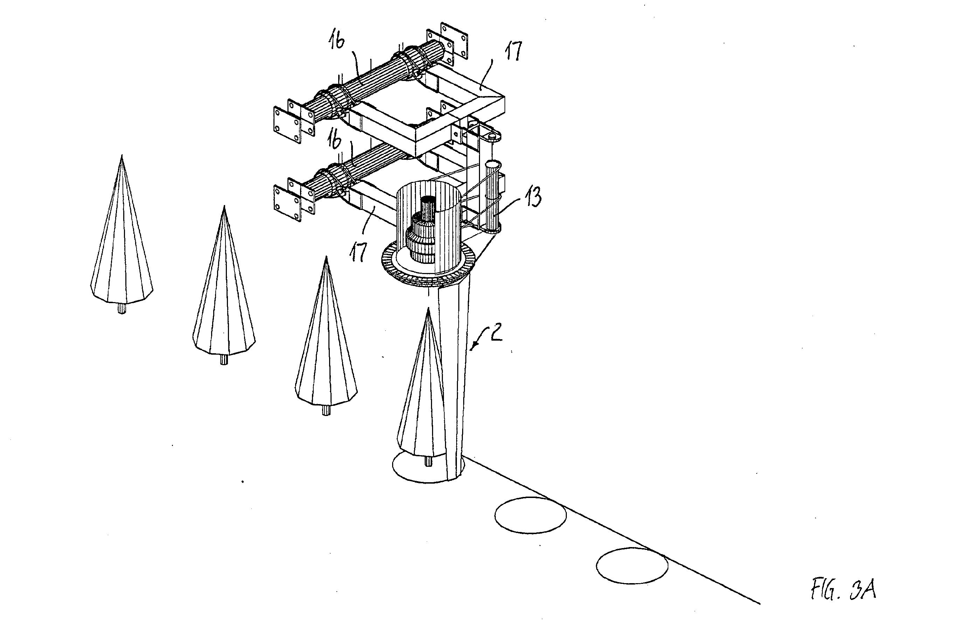

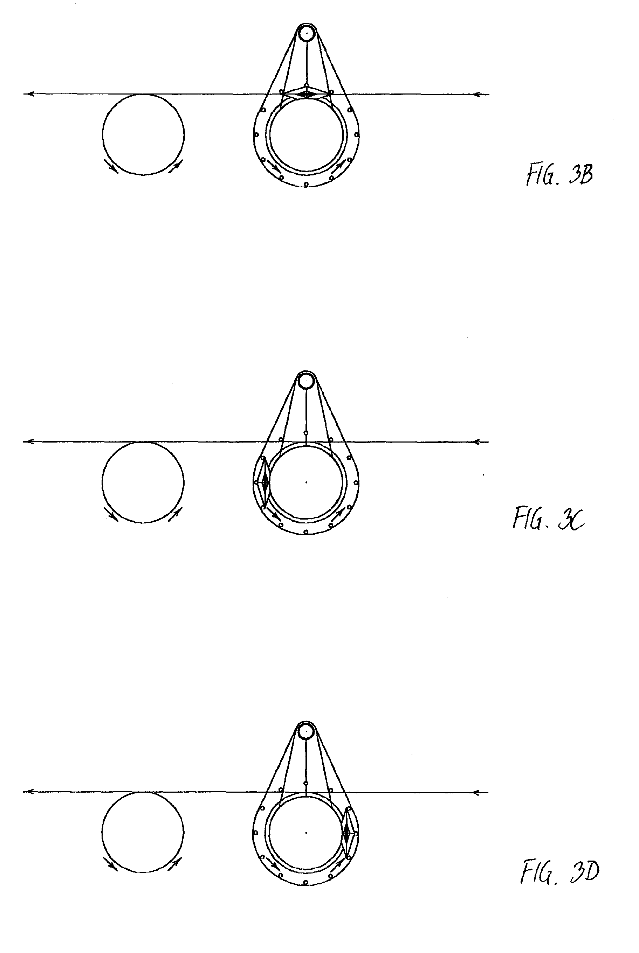

Fig. 1 shows an embodiment of the apparatus according to the invention. The apparatus comprises a blade 1 intended for cutting through the soil and/or for cutting any roots of a plant (see fig. 3A, fig. 4A and fig. 5A) situated in the soil, thereby cutting free the plant from the soil. The blade 1 comprises a first straight section 1A, a third straight section 1C and an intermediate second bend section 1B extending between the first section 1A and the third section 1C. During operation of the apparatus, the first section 1A is intended for being directed perpendicular to and extending through the surface of the soil, being at least partly situated in the soil. The third section 1C and the intermediate second bend section 1B are intended for being completely situated in the soil. In this embodiment of the blade, the plant will be cut completely free from the soil. Thus, both the soil at the sides of roots and the soil beneath the roots, and the sideways extending roots and the downward extending roots of the plant will be cut free from the soil surrounding a substantially cup-shaped lump of soil, which together with the roots will be cut free by the blade.

Alternative to the blade consisting in a first section 1A, an intermediate second bend section 1B and a third section 1C, the blade may consist of only a first section 1A and a second bend section 1B and not a third section 1C. In this embodiment of the blade, the plant will be cut only partly free from the soil. Only the soil at the side of the roots and an outer circumference of the soil beneath the roots, and only the sideways extending roots and the downward extending roots only in the proximity of the sideways extending roots of the plant will be cut free from the soil surrounding the substantially cup-shaped lump of soil cut free by the blade. However, depending on the size of the plant and/or depending on the type of roots (many small, short roots or few long, large roots) of the plant being cut free, the rest of the downward extending roots not being cut free may more or less easily be pulled free from the surrounding soil.

Even more in the alternative to the blade consisting of a first section 1A, a second bend section 1B and a third section 1C, the blade may consist of only a first section 1A and neither a second bend section 1B nor a third section 1C. In this embodiment of the blade, the plant will be cut only partly free from the soil, i.e. only the soil at the side of the roots and only the sideways extending roots of the plant will be cut free from the soil surrounding the substantially cup-shaped lump of soil cut free by the blade. However, depending on the size of the plant and/or depending on the type of roots (many small, short roots or few long, large roots) of the plant being cut free, the downward extending roots not being cut free may more of less easily be pulled free from the surrounding soil.

The blade 1 is attached to a connection beam 2 by means of bolts (not shown), by welding or by any other suitable means for securing the blade to the connection beam 2. The connection beam extends from a proximate end 3 of the beam to a distant end 4 of the beam, at which distant end 4 of the beam the blade 1 is a attached. Alternatively to the blade 1 being an element separate from the connection beam 2, the blade 1 may constitute an integrated prolongation of the connection beam 2, so that the connection beam 2 and the blade 1 is the one and same element.

In the embodiment shown in fig. 1, the connection beam 2 is an ordinary square-profiled beam. Any alternative cross-section of the connection beam, such as circular, may however be adopted, and the connection beam need not have the same cross-section along the entire extension of the connection beam. Thus, the proximate end 3 of the connection beam 3 may have a larger and perhaps differently shaped cross-section than the cross-section at the distant end 4 of the connection beam.

More preferred, the connection beam 2 may have a shape providing increased rigidity in a direction parallel with possible cutting directions, shown by a two-way arrow A, of the blade 1, when cutting through the soil (see later description explaining the operation of the apparatus). Such shape may be a an oval cross-section (perhaps an ellipse), a triangular cross-section (perhaps an isosceles triangle with the isosceles legs being directed in one of the cutting directions A of the blade) or a diamond-shaped cross-section (as in a pack of playing cards), perhaps provided with a stiffening rib extending inside the profile and parallel with the cutting directions A of the blade from one point of the cross-section to another opposite point of the cross-section.

At the proximate end 3 of the connection beam 2, the connection beam 2 is provided with a sideways extending section 5 slidingly guided in a longitudinal sideways extending bearing 6 mounted to the remainder of the apparatus. The position of the connection beam 2 and the blade 1 in a direction perpendicular to the first section 1A of the blade may be adjusted by sliding the sideways extending section 5 in the bearing 6, either outwards, shown by arrow B, in relation to a longitudinal axis D of the apparatus or inwards, shown by arrow C, in relation to the longitudinal axis D of the apparatus. The technical effect of this feature is that the diameter, which the first section 1A of the blade travels along, when being rotated (see later explanation of the operation of the apparatus), may be adjusted depending on the type of plants, depending on the size of the plants, depending on how far sideways the roots of the plant extends, and depending on any pot or bucket, which the plant together with the cup-shaped lump of soil is to be placed in.

The remainder of the apparatus comprises a circular bearing 7, a motor 8 and a gear mechanism 9. The connection beam 2 and the blade 1 is mounted to a circular moving part 10 of the circular bearing 7 and a corresponding fixed part 11 of the circular bearing 7 is mounted to a support 12 for suspending the apparatus to a tractor or any other vehicle used in gardening, forestry, horticulture or agriculture together with the apparatus. The circular bearing 7 may be a journal bearing, a roller bearing or a ball bearing. The circular moving part 11 of the bearing is intended for being rotated by means of the motor 8 through the gearbox 9. The motor 8 may be any type of motor suited for and capable of rotating the blade, when the blade is cutting through the soil and the roots. Preferably, the motor is a hydraulic motor, where the hydraulic pressure for operating the hydraulic motor is provided by a pump of the vehicle in connection with which the apparatus is employed. The rotational speed of the drive shaft of the motor may then also be easily adjusted by regulating the hydraulic pressure. Alternatively, the motor may be an electrical motor or a small combustion engine. The gear mechanism is preferably a planetary gear, but other gear mechanisms may be installed instead. Depending on the type of motor, the gearbox may possibly be omitted, especially if the motor is capable of providing a satisfactory high torque at relatively low rotational speed of the drive shaft of the motor.

The support 12 for suspending the apparatus to a vehicle consists of a hinge 13 and three laterally extending support arms 14 extending between the hinge 13 and an intermediate element 15. The hinge is capable of turning around a rotational axis E. The intermediate element 15 has the shape of a screen partly encircling the motor. However, the intermediate element does not have as its primary purpose to screen the motor, but has as its primary purpose to form an intermediate element connecting the support arms 14 with the fixed part 12 of the rotary bearing.

### Operation of the apparatus is as follows:

The tractor or other vehicle, which the apparatus is suspended from via the support, is driven to a location where one or more plants are to be cut free from the soil for later removal of the plant and possible transplantation of the plant. At the location of the plants, the blade is forced down into the soil in the proximity of the plant. Either the blade is forced into the soil in the immediate proximity of the plant to be cut free, or the blade is forced into the soil at a chosen distant proximity location, and subsequently the tractor with the blade in the soil is driven to the plant pulling the blade through the soil. In the first case, the bearing and the motor is situated right above the plant, when the blade is forced into the soil. In the latter case, the bearing and the motor is brought into a position over the plant subsequently to the blade having been forced into the soil.

When the bearing and the motor is situated right above the plant, the motor is activated and the blade starts rotating around a longitudinal axis of the bearing. The blade is preferably rotated at least 360° so that a full circle around the plant is established by the first section of the blade, thereby cutting free the soil at the side of the roots and cutting free any sideways roots of the plant extending outside the diameter established by the rotating first section of the blade. During the preferred 360° rotation of the blade, the third section of the blade (if present) will travel along a disc-shaped contour, thereby cutting free the soil underneath the roots and cutting free any roots of the plant extending downwards beneath the disc-shaped contour. The diameter of the circle is determined by a radial distance from the rotational axis of the bearing and sideways along the sideways section of the beam to a cutting edge of the blade.

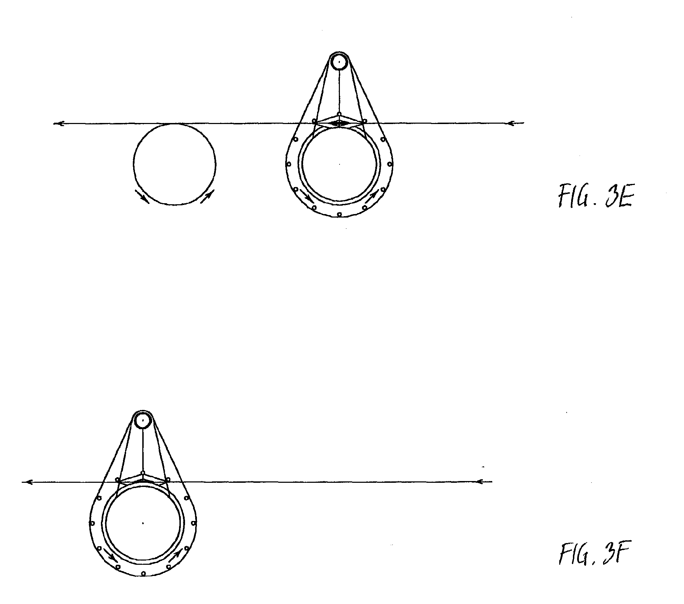

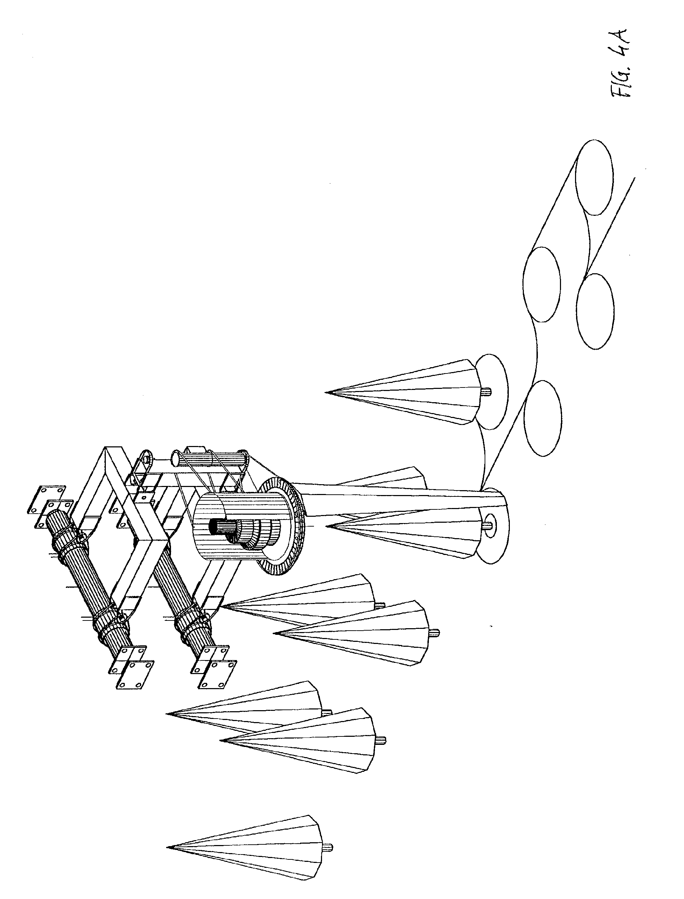

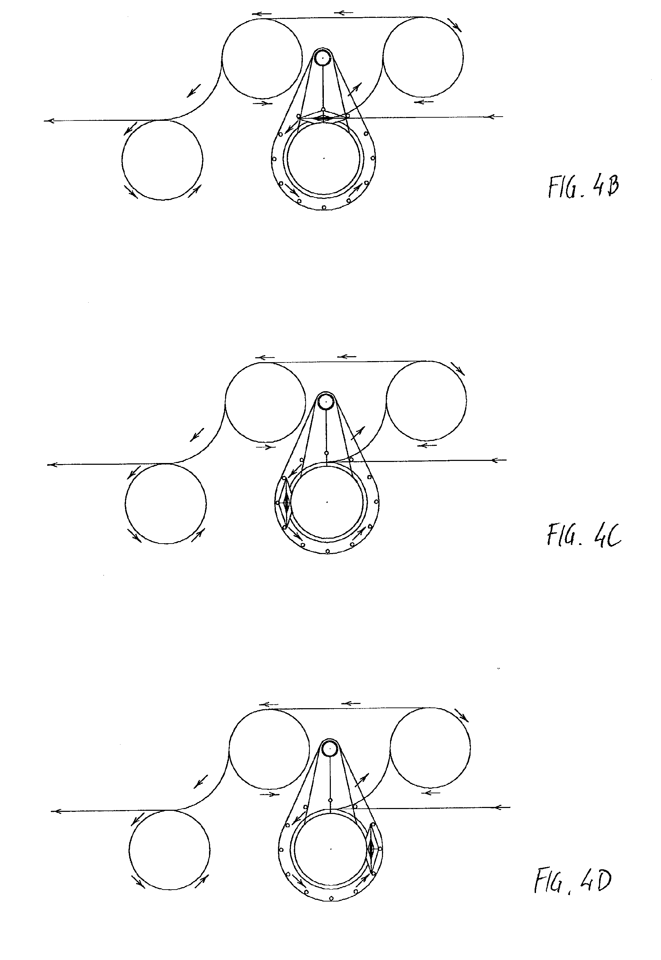

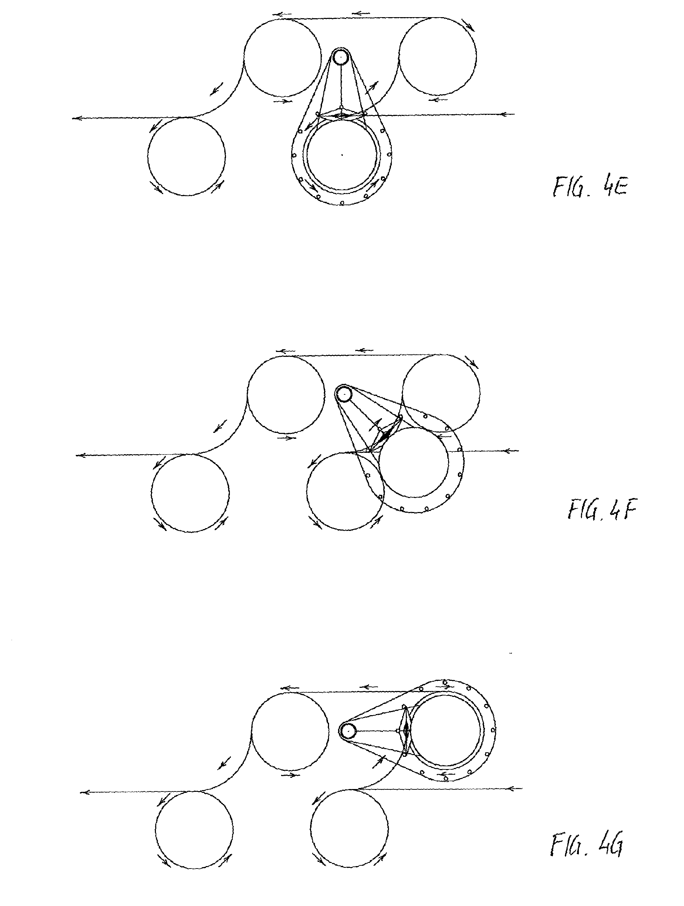

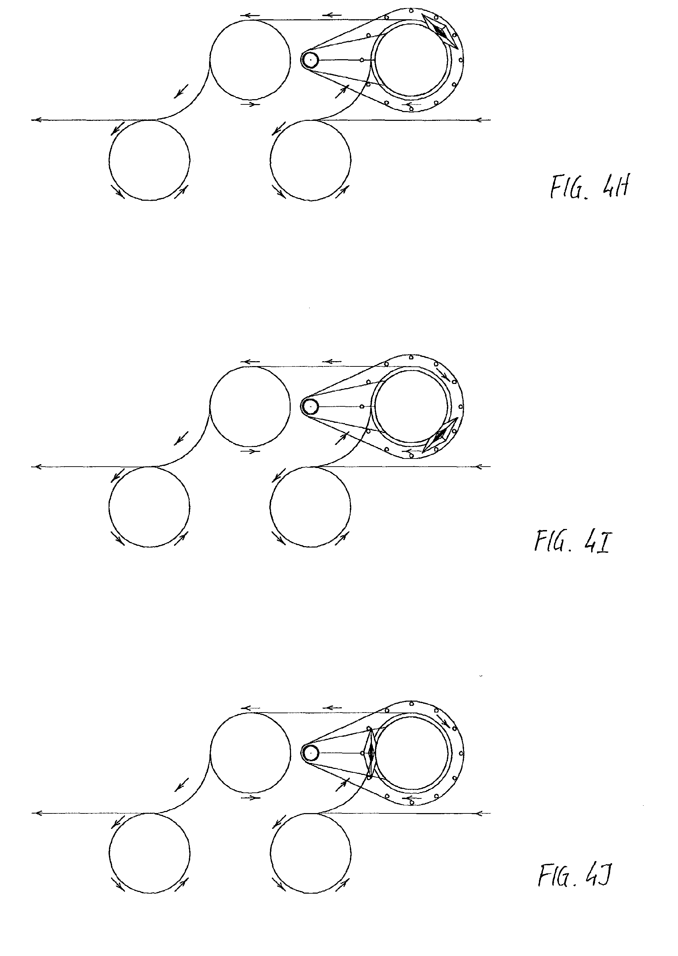

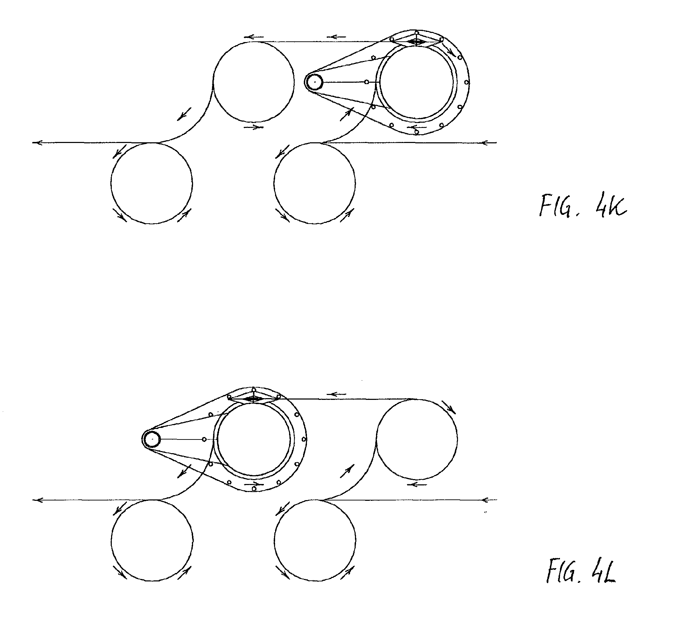

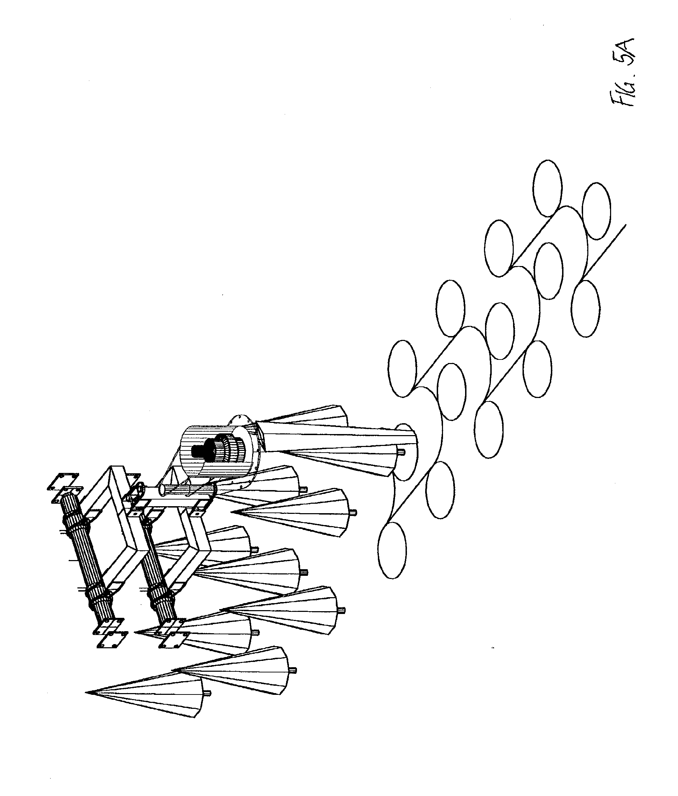

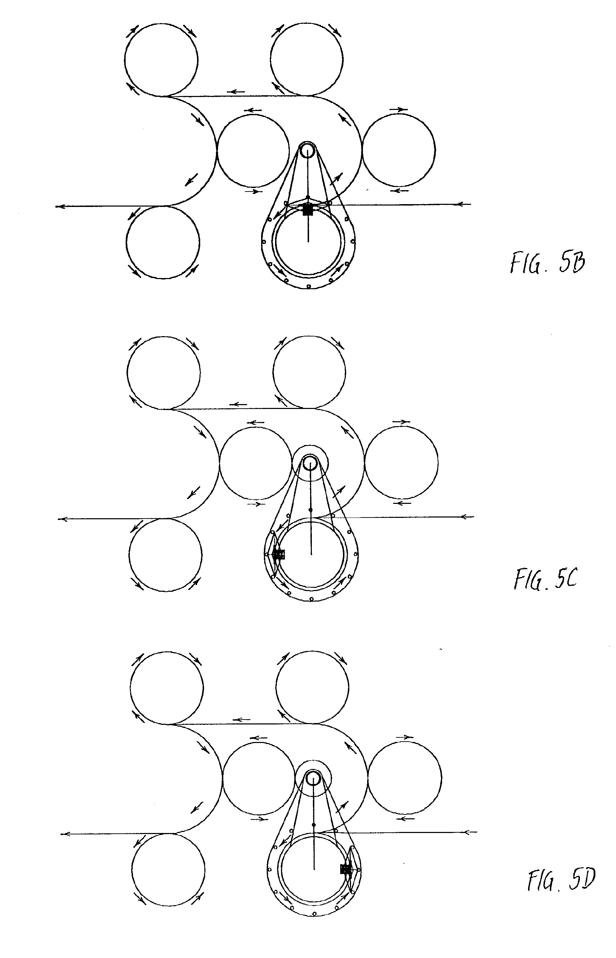

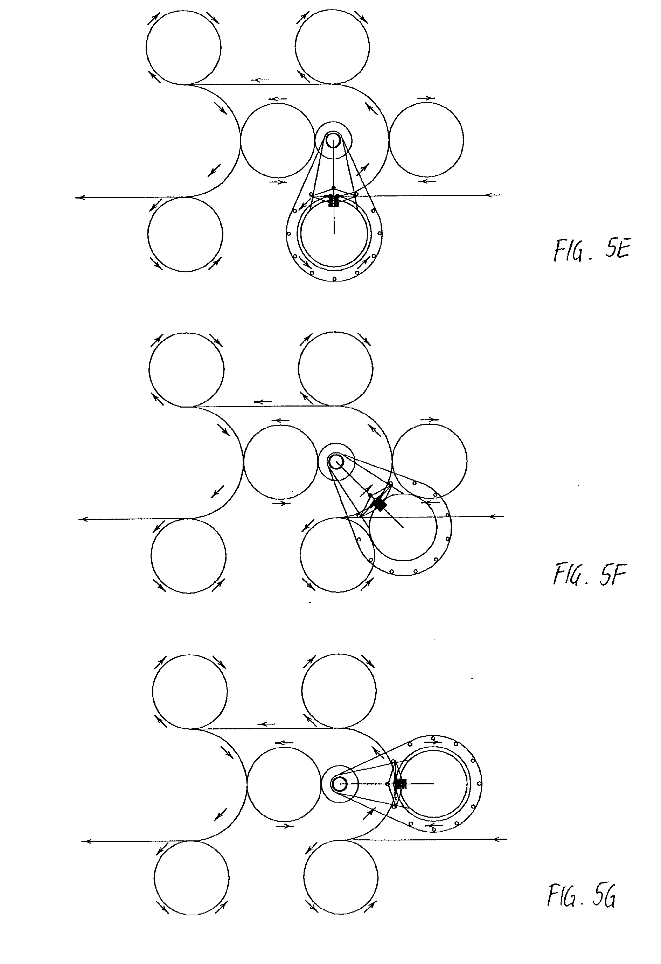

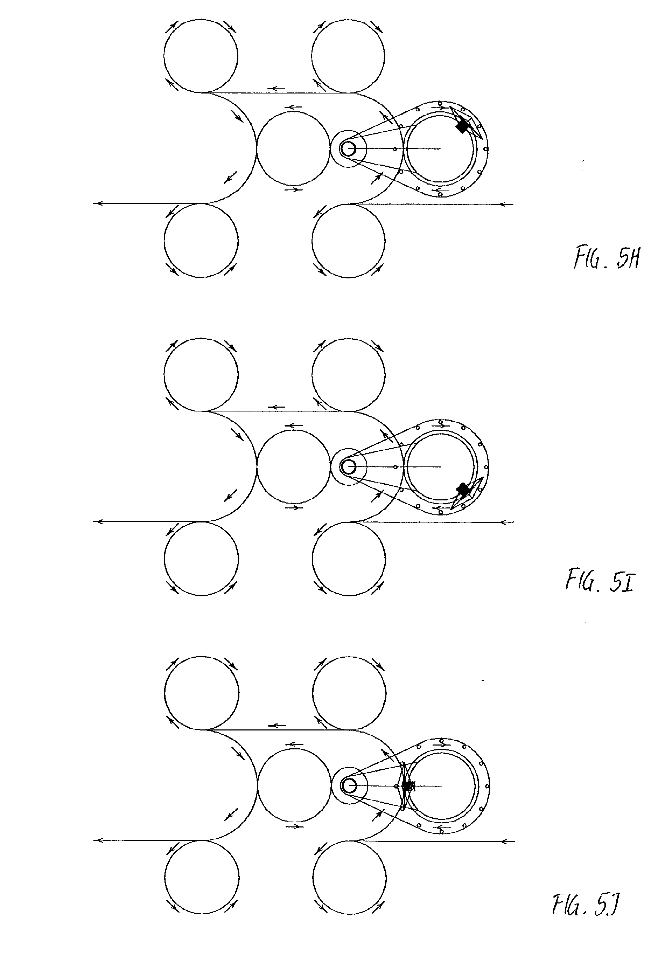

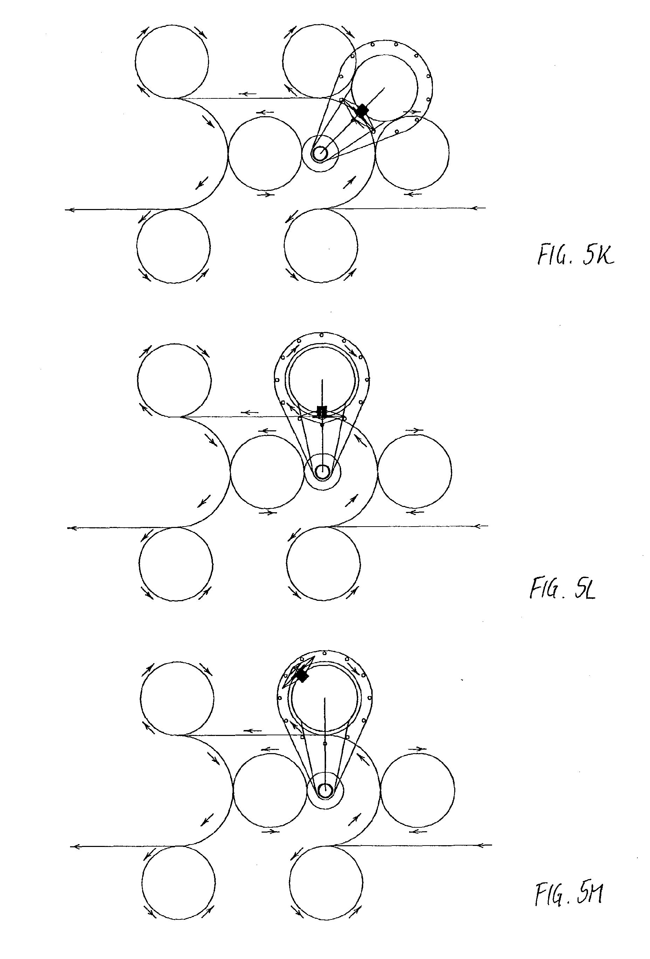

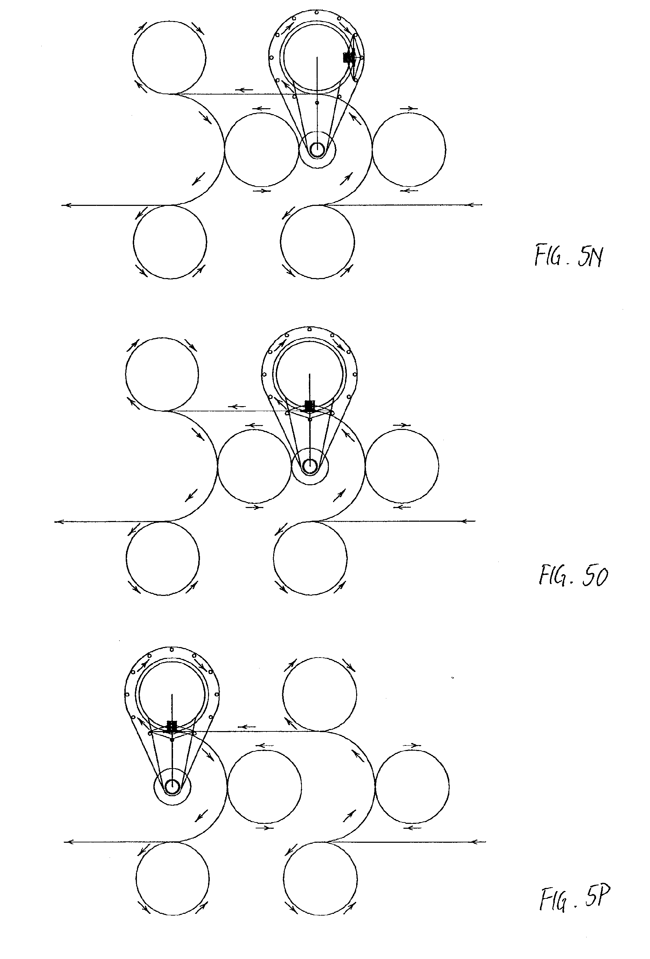

Possible patterns when operating the apparatus is shown in fig. 3A-3F, in fig. 4A-4L and in fig. 5A-5P. The pattern shown in fig. 3A-3F is a pattern used, when only cutting free one row of plants. The pattern shown in fig. 4A-4L is a pattern used when cutting free two neighbouring rows of plants. The pattern shown in fig. 4A-5L is a pattern used, when cutting free two neighbouring rows of plants. The pattern shown in fig. 5A-5P is a pattern used, when cutting free three neighbouring rows of plants. Common to all figures 3A-3F, 4A-4L and 5A-5P is that a direction of movement of a tractor supporting the apparatus is from a right side of the figure to a left side of the figure, however in a direction obliquely upwards in fig. 3A, fig. 4A and fig. 5A, which are figures shown in the perspective.

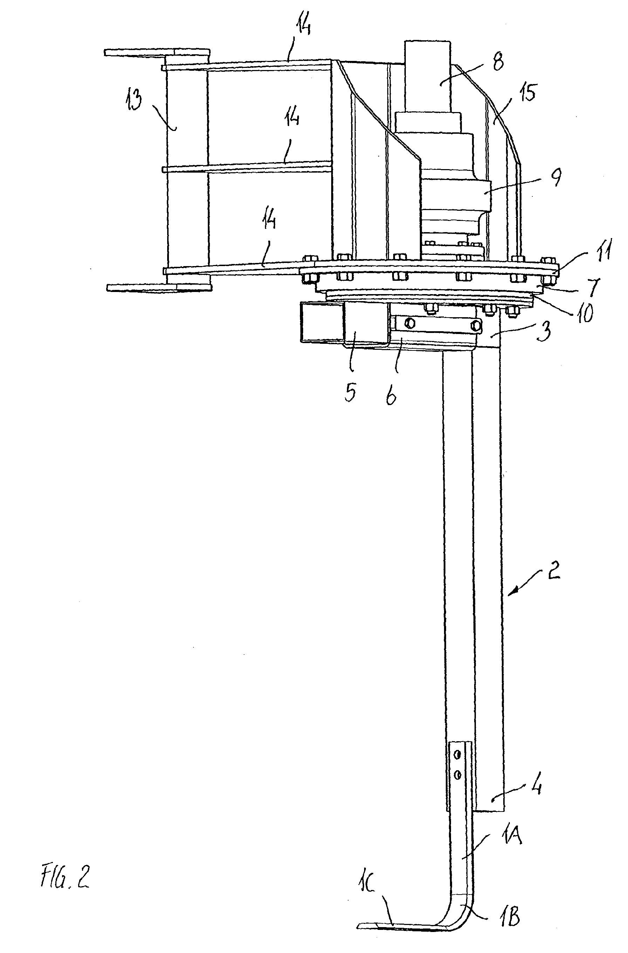

As mentioned, the apparatus according to the invention is intended for cutting free plants. The cutting patterns shown are dependent on the plants being situated with a mutual distance in the rows and a mutual distance across the rows, which correspond to a distance L between the rotational axis E hinge 13 (see fig. 1 and fig. 2) and the longitudinal axis D of the apparatus (see fig. 1 and fig. 2). This may be accomplished by using the same support 12 for a planting apparatus as that support, which the apparatus according to the invention is suspended from. It may also be accomplished by simply taking into consideration the above mutual distances in the rows and across the rows, non-dependent on the method and/or apparatus used when planting the plants.

A planting method and/or apparatus can possibly consist in drilling holes in the soil, in which the plants may be planted. If the apparatus such as a drill is suspended in the same support as that, which later on will be used for cutting free the plants, then the plants will be planted with a mutual distance within the rows and across the rows exactly in such a manner that cutting free of the plants can be performed without difficulty according to the cutting patterns shown in the preceding figures.

The apparatus is suspended in the support 12 mounted to the tractor (not shown) or other vehicle with which the apparatus is employed. In the embodiment shown, the support is intended for being mounted to a portal tractor. The support comprises a suspension with two horizontal bars 16 stretched out between and mounted to the chassis (not shown) of the portal tractor. Onto the horizontal bars 16 a set of further bars 17 are attached and onto these further bars, the substantially vertically extending hinge 13 is attached. From the vertically extending hinge, the three support arms 14 extend to the intermediate element 15 attached to the fixed part 12 of the rotary bearing.

Fig. 3A-3F shows the cutting free of plants only situated in one row. In the embodiment shown, the apparatus is turned to a left side in relation to the support and the apparatus is maintained in said left position during the cutting free of the plants. A pattern is shown where the blade is forced into the soil in a position, shown in the right side lower corner of the figure, prior to the position of the first plant. The blade is then pulled by the tractor through the soil and to the first plant, to the right side of the plant seen in the direction of movement of the tractor.

When reaching the first plant in the row, the blade is rotated from an initial position and 360° around the plant in order to cut free the first plant. The rotation is performed from the right side of the plant counter-clockwise back to the initial position at the right side of the plant. The rotation could also be performed clock-wise. When having reached the initial position again at the right side of the plant, the blade is pulled further forwards to the second plant, also to the right side of the plant seen in the direction of movement of the tractor. At the second plant, the cutting free of the plant is performed as described above.

Fig. 4A-4L show the cutting free of plants situated in two rows. In the embodiment shown, the apparatus is turned to the left side in relation to the support and the apparatus is firstly maintained in said one position during the cutting free of plants in a first row. A pattern is shown where the blade is forced into the soil in a position, shown in the right side lower corner of the figure, prior to the position of the first plant. The blade is then pulled through the soil to the first plant in the first row, to the right side of the plant seen in the direction of movement of the tractor.

When reaching the first plant in the first row, the blade is rotated from an initial position at the right side of the plant and 360° around the plant in order to cut free the first plant in the first row. The rotation is performed from the right side of the plant counter-clockwise back to the initial position at the right side of the plant. The rotation could also be performed clock-wise. When having reached the initial position again at the right side of the plant, the blade is turned around the vertical hinge and thus pulled sideways along a circular track to a middle position in relation to the support, and the apparatus is maintained in said middle position during the cutting free of plants situated in a second row. The blade is turned to a position in front of the first plant in the second row, seen in the direction of movement of the tractor.

Turning of the blade by turning the support may be accomplished by a separate motor turning the hinge around the rotary axis of the hinge. Preferably, the motor is a hydraulic motor, where the hydraulic pressure for operating the hydraulic motor is provided by a pump of the vehicle in connection with which the apparatus is employed. The rotational speed of the drive shaft of the motor may then also be easily adjusted by regulating the hydraulic pressure. Alternatively, the motor may be an electrical motor or a small combustion engine. The gear mechanism is preferably a planetary gear, but other gear mechanisms may be installed instead. Depending on the type of motor, the gearbox may possibly be omitted, especially if the motor is capable of providing a satisfactory high torque at relatively low rotational speed of the drive shaft of the motor. Even alternatively, the motor turning the support may be the same motor as the one driving the blade through the soil.

At the first plant in the second row, the cutting free of the plant is performed by the blade being rotated from the initial position in front of the first plant in the second row, but not 360°, however 450°, in order to cut free the plant. The rotation is performed from the front side of the plant clockwise past the initial position in front of the plant and to the right side of the plant seen in the direction of movement of the tractor. The rotation could also be performed counter clock-wise. When having reached the position at the right side of the plant, the blade is pulled forwards to the second plant in the second row, also to the right side of the plant seen in the direction of movement of the tractor.

When reaching the second plant in the second row, the blade is rotated from an initial position and 450° around the plant in order to cut free the plant in the second row. The rotation is performed from the right side of the plant counter-clockwise to a position in front of the plant. The rotation could also be performed clock-wise. When having reached the position in front of the second plant in the second row, the blade is turned around the vertical hinge and thus pulled sideways along a circular track to the left position in relation to the support, and the apparatus is maintained in said left position during the cutting free of the second plant situated in the first row.

When reaching the second plant in the first row, the blade is rotated from an initial position at the right side of the plant and 360° around the plant in order to cut free the second plant in the first row. The rotation is performed from the right side of the plant counter-clockwise back to the initial position at the right side of the plant. The rotation could also be performed clock-wise. When having reached the position at the right side of the plant, the blade is pulled forwards to third plant (not shown) in the first row, also to the right side of the plant seen in the direction of movement of the tractor.

Thereafter, the pattern as described from cutting free of the first plant in the first row is repeated as often as necessary in order to cut free more plants from the first row and the second row. Cutting free plants in two rows during a movement of the tractor forwards along the two rows necessitates the tractor's capability of covering both rows at the same time. This depends on the mutual distance between the two rows and it depends on the size of the portal tractor supporting the apparatus by the suspension.

Fig. 5A-5P show the cutting free of plants situated in three rows. The apparatus is turned around the vertical hinge to the left side in relation to the support, seen in the direction of movement of the tractor, and the apparatus is firstly maintained in said left side during the cutting free of the plants in a first row. A pattern is shown where the blade is forced into the soil in a position, shown in the right side lower corner of the figure, prior to the position of the first plant. The blade is then pulled through the soil to the first plant in the first row, to the right side of the plant seen in the direction of movement of the tractor.

When reaching the first plant in the first row, the blade is rotated from an initial position at the right side of the plant and 360° around the plant in order to cut free the first plant in the first row. The rotation is performed from the right side of the plant counter-clockwise back to the initial position at the right side of the plant. The rotation could also be performed clock-wise. When having reached the initial position again at the right side of the plant, the blade is turned around the vertical hinge and thus pulled sideways along a circular track to a middle position in relation to the support, seen in the direction of movement of the tractor, and the apparatus is maintained in said middle position during the cutting free of plants situated in a second row.

At the first plant in the second row, the cutting free of the first plant is performed by the blade being rotated from an initial position in front of the first plant in the second row and 360° around the plant in order to cut free the first plant in the second row. The rotation is performed from the front side of the plant clockwise and back to the initial position at the front side of the plant, seen in the direction of movement of the tractor. The rotation could also be performed counter clock-wise. When having reached the position at the front side of the first plant in the second row, the blade is turned around the vertical hinge and thus pulled sideways along a circular track to a right side in relation to the support, seen in the direction of movement of the tractor, and the apparatus is maintained in said right side during the cutting free of plants situated in a third row.

When reaching the first plant in the third row, the blade is rotated from an initial position at the left side of the plant and 360° around the plant in order to cut free the first plant in the third row. The rotation is performed from the left side of the plant clockwise back to the initial position at the left side of the plant. The rotation could also be performed counter clock-wise. When having reached the initial position again at the left side of the first plant in the third row, the blade is pulled forwards to the second plant in the third row, also to the left side of the plant seen in the direction of movement of the tractor.

When reaching the second plant in the third row, the blade is rotated from an initial position at the left side of the plant and 360° around the plant in order to cut free the next plant in the third row. The rotation is performed from the left side of the plant clockwise back to the initial position at the left side of the plant. The rotation could also be performed counter clock-wise. When having reached the initial position again at the left side of the next plant in the third row, the blade is turned around the vertical hinge and thus pulled sideways along a circular track to the middle position in relation to the support, seen in the direction of movement of the tractor, and the apparatus is maintained in said middle position during the cutting free of further plants situated in the second row.

At the second plant in the second row, the cutting free of the plant is performed by the blade being rotated from an initial position in front of the plant and 360° around the plant in order to cut free the second plant in the second row. The rotation is performed from the front side of the plant counter clockwise and back to the front side of the plant, seen in the direction of movement of the tractor. The rotation could also be performed clock-wise. When having reached the position at the front side of the second plant in the second row, the blade is turned around the vertical hinge and thus pulled sideways along a circular track to the left side in relation to the support, seen in the direction of movement of the tractor, and the apparatus is maintained in said left side during the cutting free of further plants situated in the first row.

When reaching the second plant in the first row, the blade is rotated from an initial position at the right side of the plant, seen in the direction of movement of the tractor, and 360° around the plant in order to cut free the plant in the first row. The rotation is performed from the right side of the plant counter clockwise back to the initial position at the right side of the plant. The rotation could also be performed clock-wise. When having reached the initial position again at the right side of the second plant in the first row, the blade is pulled forwards to third plant (not shown) in the same first row, also to the right side of the plant, seen in the direction of movement of the tractor.

Thereafter, the pattern as described from cutting free of the first plant in the first row is repeated as often as necessary in order to cut free more plants from the first row, the second row and the third row. Cutting free plants in three rows during a movement of the tractor forwards along the three rows necessitates the tractor's capability of covering all three rows at the same time. This depends on the mutual distance between the rows and it depends on the size of the portal tractor supporting the apparatus by the suspension.

Alternatively to cutting free the plants along patterns as shown and by the method described, other patterns and other methods may be employed. Especially in the case, where the plants are planted with a mutual distance in the rows and/or a mutual distance across the rows not corresponding to the dimensions of the support of the apparatus, it may be necessary to employ other cutting methods and other cutting patterns. Especially when cutting free plants in a middle row of three rows, it may be beneficial to start out the cutting free of each plant by placing the blade along a right side or a left side of the plant.

Thereby, if the mutual distance between the plants in the row does not place the blade in front of a plant after a circular movement of the blade from the first row to the second row or from the third row to the second row, then it may be necessary to pull forwards or rearwards the blade in order to place the blade in a position ready for cutting free the plant. If a forwards or rearwards displacement is necessary, then it is necessary for the blade to be placed at one side of the plant and not in front of or behind the plant.

In the figures shown, each plant in the one or more rows are cut free. However, it will be possible only to cut free some of the plants in the one or more rows, or to cut free all the plants in one row and only some of the plants in the other rows. Possibly, if only a thinning out of the plants is to be effected, then perhaps only plants in the rows having a certain height is cut free, or perhaps only every second plant in each row is cut free and the other plants are left in the soil. Also, if a selection of plants having preferred distinctive characters is needed, perhaps only plants having a certain height, plants having a certain visual appearance or plants having other distinctive characters are cut free and the other plants are left in the soil.

Common to all the patterns shown in the above-mentioned figures is the preferred feature of maintaining the blade in the soil, when pulling the blade from one plant to another, both when puling the blade from one plant in one row to another plant in the same row of when pulling the blade from one plant in one row to another plant in another row. Alternatively, the blade of the apparatus may be extracted from the soil during the whole or during part of the pulling of the blade between the plants. This would still make it possible to obtain a quasi-continuos movement of the blade between the plants, but would require a lifting and lowering of the blade from one plant to the other. However, in very dense soil or in soil with many stones, it could be beneficial to reduce the pulling of the blade through the soil.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

## Claims

1. A method for cutting free plants by cutting through soil surrounding at least one plant, said method comprising the steps of:
a) providing a cutting apparatus, said cutting apparatus comprising a blade,
b) inserting at least a first section of the blade into the soil,
c) cutting through the soil around a first plant with the cutting apparatus,
d) displacing the cutting apparatus to a proximity of a second plant, while maintaining at least a part of the blade in the soil during the displacement of the cutting apparatus, and
e) cutting through the soil around the second plant with the cutting apparatus.

2. A method according to claim 1, wherein the blade is inserted in a position substantially normal relative to the surface of the soil, at least during the cutting around the plants.

3. A method according to any of the claims 1-2, wherein the blade is maintained in a fixed position relative to the surface of the soil seen in a direction normal to the surface of the soil, said fixed position being maintained both during cutting around the plants and during displacement of the cutting apparatus from the first plant to the second plant.

4. A method according to any of the claims 1-2, wherein the blade is maintained in a fixed position relative to the surface of the soil seen in a direction normal to the surface of the soil, said fixed position being relatively lower in relation to the surface of the soil during cutting around the plants and being relatively higher in relation to the surface of the soil during displacement of the cutting apparatus from the first plant to the second plant.

5. A method according to any of the preceding claims, wherein the cutting apparatus at least partly is cutting also roots of the plants as the cutting apparatus is cutting through the soil around the plants.

6. A method according to any of the preceding claims, wherein the blade is displaced at least quasi-continuously during cutting through the soil, said quasi-continuously displacement possibly only being interrupted during change of displacement direction.

7. A method according to any of the preceding claims, wherein the blade, while cutting through the soil around the plants, is displaced in a substantially circular cutting pattern, preferably with the plant in a centre of said circular cutting pattern.

8. A method according to the claim 7, wherein the blade, while displacing the cutting apparatus to the proximity of a second plant, creates an interconnecting cutting pattern, the interconnecting cutting pattern having a least an initial part with a substantially tangential relationship to the circular cutting pattern surrounding the first plant.

9. A method according to the claim 8, wherein the interconnecting cutting pattern is a substantially straight line.

10. A method according to the claim 8, wherein the interconnecting cutting pattern is a substantially curved line.

11. A cutting apparatus for cutting free plants by cutting through the soil surrounding at least one plant, said apparatus comprising:
- a rotary bearing and a connecting beam rotatably mounted in the rotary bearing, the connecting beam being adapted to be rotated by rotation means, and
- a blade being connected to the rotary bearing via the connecting beam, and said blade further being adapted to cut through the soil when inserted into the soil, and said blade preferably also being adapted for cutting roots of the plants, when being rotated around a plant constituting at least a first plant from a plurality of plants,
- and where an axis of rotation of the rotary bearing during operation of the cutting apparatus is intended for being laterally positioned within a projection, normal to the surface of the soil, of the plant being cut free,
- and where the rotary bearing during operation of the cutting apparatus is intended for being vertically positioned at a level higher than the height of the at least first plant.

12. A cutting apparatus according to claim 11, wherein at least the blade, in relation to the support, is displaceable in a direction substantially normal to the surface of the soil.

13. A cutting apparatus according to any of the claims 11-12, wherein the blade comprises at least one portion having a shape chosen from the group of: a substantially linear shape, an inwardly curved shape, an outwardly curved shape, a partly circular shape, a partly parabolic shape, a partly elliptic shape, a shape with a at least a first section and third section separated by a second bend section, and any combinations thereof.

14. A cutting apparatus according to any of the claims 11-13, wherein the rotary bearing, in relation to the support, is mounted laterally at least linearly displaceable on the support.

15. A cutting apparatus according to any of the claims 11-14, wherein the rotary bearing is mounted at least pivotally displaceable on the support, the pivotal axis being different from the axis of rotation of the rotary bearing.

16. A cutting apparatus according to any of the claims 11-15, wherein at least part of the connecting beam is capable of being radially displaced relatively to the rotary bearing.

17. A cutting apparatus according to any of the claims 11-16 adapted to be moved by a vehicle suitable for an agricultural environment, preferably a portal tractor, a conventional tractor, a trailer, a jeep, a truck, and a guiding means in a greenhouse.

18. A cutting apparatus according to claim 17, wherein the rotation means is adapted to be driven from a power source located on, within and/or at the vehicle supporting the apparatus.
